# EUROPÄISCHE PATENTANMELDUNG

(11) **EP 2 937 271 A1**
(43) Veröffentlichungstag der Anmeldung: **28.10.2015**
(21) Anmeldenummer: 15164329.3
(22) Anmeldetag: 20.04.2015
(51) Int. Cl.: B62J 17/04, B62J 11/00

(54) **HELMTRÄGER FÜR OFFENE FAHRZEUGE**

(30) Priorität: 22.04.2014 BE 201400284
(71) Anmelder: Hoffmann, Norbert, 4790 Burg-Reuland (BE)
(72) Erfinder: Hoffmann, Norbert, 4790 Burg-Reuland (BE)
(74) Vertreter: Limbeck, Achim

(57) **Zusammenfassung**

Die vorliegende Erfindung betrifft einen Helmträger (4) für offene Fahrzeuge (1), die einer Helmpflicht unterliegen, insbesondere ein Motorrad, ein Quad oder dergleichen, wobei der Helmträger (4) ein im Wesentlichen stabförmiges Profil (5;21) umfasst und so ausgebildet und an dem Fahrzeug angeordnet ist, dass er im inneren des Helmes eingreift, dadurch gekennzeichnet, dass das im Wesentlichen staubförmige Profil (5; 21) des Helmträgers (4) derart ausgebildet und an/in einem Korosserieteil (2; 20) des Fahrzeuges (1) angeordnet ist, dass das stabförmige Profil (5; 21) on/in dem Karosserieteil (2; 20) verschieblich ist. Besonders bevorzugt ist das im Wesentlichen stabförmige Profil (21) als eine in die Lenksäule (20) des Fahrzuges (1) verschieblich angeordnete Stange (21) ausgebildet und weist ein Schloss (23) auf.

## Beschreibung

### Technisches Gebiet

Die vorliegende Erfindung betrifft einen Helmträger für offene Fahrzeuge, die einer Helmpflicht unterliegen, insbesondere ein Motorrad, ein Quad oder dergleichen, wobei der Helmträger ein im Wesentlichen stabförmiges Profil umfasst und so ausgebildet und an dem Fahrzeug angeordnet ist, dass er im Inneren des Helmes eingreift.

### Stand der Technik

Ein derartiger Helmträger ist bekannt aus der chinesische Patent-anmeldung 2 500 580. Der bekannte Helmträger ist durch eine Stange gebildet, die am Lenker des Motorrades angebracht ist und sich nahezu senkrecht auf dem Lenker erstreckt.

Das Tragen eines Helmes ist für Fahren von offenen Fahrzeugen, wie Motorrädern oder Karts gesetzlich vorgeschrieben. Der Fahrer oder die Fahrerin eines Motorrades muss also mit seinem oder ihrem Helm fahren.

Jedoch ist das Rangieren eines Helmes öfters ein Problem wenn der Fahrer oder die Fahrerin unterwegs anhalten will, bspw. zum Tanken, zum Essen oder zum Trinken. Öfters muss der Fahrer oder die Fahrerin seinen oder ihren Helm mitnehmen, was an sich wieder unbequem ist. Obwohl der aus der chinesischen Patentanmeldung 2 500 580 bekannten Helmträger die Möglichkeit bietet den Helm zu rangieren, hat diesen bekannten Helmträger den Nachteil, dass er im Falle eines Unfalls eine Gefahr für den Fahrer oder die Fahrerin bietet.

Der vorliegenden Erfindung liegt die Aufgabe zu Grunde, einen Helmträger zu schafen, welcher die vorgenannten Nachteile ausr-äumt und welche geeignet ist, dass der Fahrer seinen Helm auf eine problemlose und sichere Art und Weise abstellen kann, wenn er eine Haltepause unterwegs einlegt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Helmträgers sind in den abhängigen Unteransprüchen angegeben.

Erfingdungsgemäß ist ein Helmträger der eingangs genannten Art dadurch gekennzeichnet, dass das im Wesentlichen stabförmige Profil des Helmträgers derart ausgebildet und an/in einem Karosserieteil des Fahrzeuges angeordnet ist, dass das stabförmige Profil an/in dem Karosserieteil verschieblich ist.

In einer besonders vorteilhaften Ausführungsform der Erfindung ist das im Wesentlichen stabförmige Profil als ein an dem Windschutz des Fahrzeuges verschieblicher Schieber ausgebildet, der sich im ausgezogenen Zustand über den Rand des Windschutzes erstreckt und im eingezogenen Zustand hinter bzw. unter dem Windschutz versteckt.

Der Umstand, dass der Helmträger in dieser Ausführung an dem Windschutz angebracht ist, gewährleistet eine für den Fahrer bequeme und sichere Lösung, den Helm auf schnelle und einfache Weise an dem Frontteil des Fahrzeuges zu befestigen, welcher zudem im leicht zugänglichen Handbereich des Fahrers liegt.

In einer weiteren vorteilhaften Ausführungsform der Erfindung ist das im Wesentlichen stabförmig Profil als ein in die Lenksäule des Fahrzeuges verschieblich angeordnete Stange ausgebildet. Durch das komplette Einschieben der Stange in die Lenksäule stört sie nicht während des Fahrens und bildet mithin keine Gefahr für den Fahrer.

In einer weiteren vorteilhaften Ausführungsform der Erfindung ist das im Wesentlichen stabförmige Profil als ein an das Schutzblech des Fahrzeuges verschieblich angeordneter Schieber ausgebildet. Auch hier ist der Schieber so angeordnet, dass er im Inneren des Helmes eingreift. Diese alternative Ausführungsform bietet eine Lösung im Falle eines Motorrades ohne Windschutz.

### Kurzbeschreibung der Zeichnungen

Weitere Ziele, Merkmale, Vorteile und Anwendungsmöglichkeiten des erfindungsgemäßen Helmträgers ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger Combination den Gegenstand der Erfindung, unabhängig von der Zusammenfassung in einzelnen Ansprüchen oder deren Rückbeziehung.

In den Zeichnungen zeigen
Fig.1 eine Seitenansicht eines Teiles eines Motorrades mit einem Helmträger gemäß der Erfindung;
Fig.2 einen Querschnitt in vertikaler Richtung durch den Windschutz;
Fig.3 einen Querschnitt in horizontaler Richtung durch den Windschutz;
Fign. 4, 5 und 6 wie der Helm und die Augenbrille auf dem Windschutz angebracht werden;
Fig.7 eine Sicht von unten von der Lasche mit Schieber des Helmträgers;
Fig.8 den Helmträger am Motorradschutzblech;

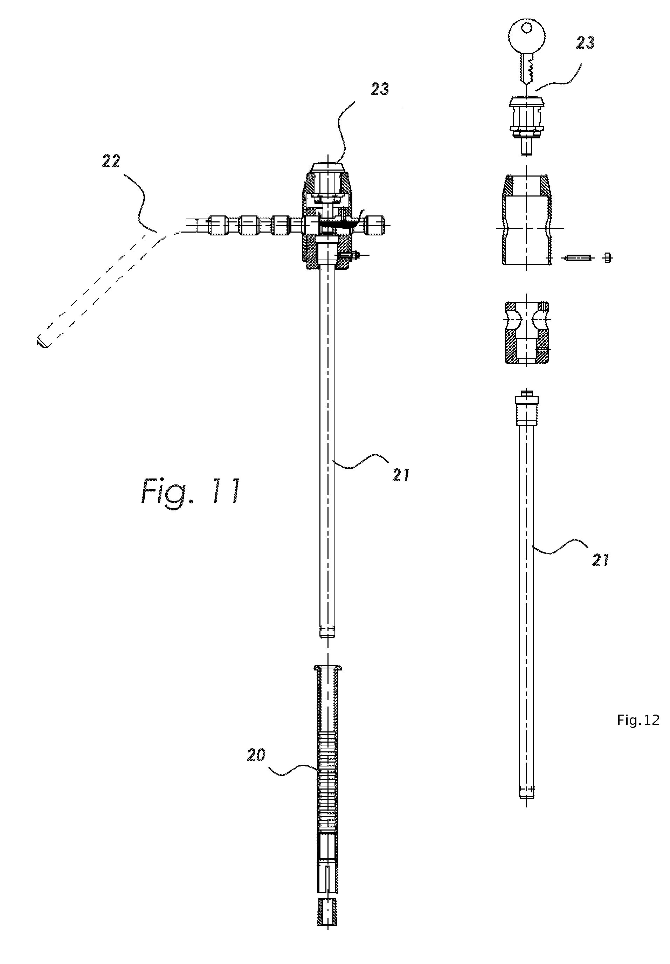

Fign. 10 und 11 den Helmträger auf der Lenksäule;
Fig. 12 die Stange, die in die Lenksäule einschiebbar ist.

### Ausführung der Erfindung

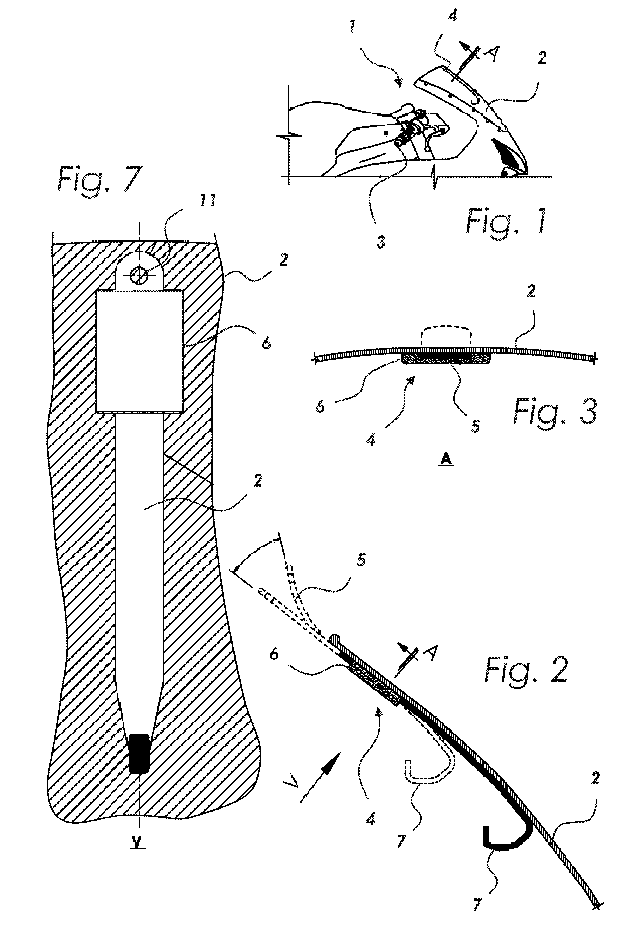

Fig.1 zeigt eine Seitenansicht eines Teiles eines Motorrades 1 mit einem an seiner Frontseite angeordneten Windschutz 2. Der Windschutz 2 erstreckt sich vorzugsweise höher als der Lenker 3 des Motorrades 1, damit er den Fahrer (nicht dargestellt) gegen Fahrtwind, herumfliegende Objekte (bspw. Insekten) und gegen wetterbedingte Einflüsse (bspw., Regen, Hagel, etc.) schützt.

Wie aus den Fign. 2 und 3 ersichtlich, ist das im Wesentlichen stabförmige Profil 5 vorzugsweise als ein an dem Windschutz 2 des Fahrzeuges 1 verschieblicher Schieber 5 ausgebildet, der sich im ausgezogenen Zustand über den Rand des Windschutzes 2 erstreckt und im eingezogenen Zustand hinter bzw. unter dem Windschutz 2 versteckt.

Der Schieber 5 ist vorzugsweise in einer Lasche 6 gehalten, welche an den Windschutz 2 angeklebt, angenietet, angeschraubt oder auf sonstige Weise dem Fachmann geläufige Weise irreversibel oder reversibel angebracht ist. Insbesondere das Kleben bietet eine vorteilhaften Lösung, weil diese einfach und zuverlässig herzustellen ist. Auf diese Art und Weise ist es auch möglich, den Helmträger 4 an dem Windschutz 2 eines bestehenden Fahrzeuges 1 nachträglich anzubringen.

In einer weiteren vorteilhaften Ausführungsform der Erfindung ist die Lasche 6 mit einer Basisplatte ausgestattet, welche eine größere Kontaktfläche bietet als die Kontaktfläche der Lasche 6 selbst. Die Lasche 6 könnte auch im Windschutz integriert sein und somit eine Einheit bilden.

In einer alternativen Ausführungsform (in der Zeichnung nicht dargestellt) ist der Schieber 5 derart an dem Windschutz 2 angeordnet, dass er durch einen Schlitz, angeordnet in dem Windschutz 2, hindurch schiebbar ist. Abhängig von der Größe des Windschutzes 2 kann der Schieber 5 dann entweder an der äußeren Seite des Windschutzes 2 angebracht sein und von der äußeren Seite durch den Schlitz nach Innen treten, oder an der inneren Seite des Windschutzes 2 angebracht sein und von der inneren Seite durch den Schlitz nach außen treten, um sich dort mindestens teilweise weiter zu erstrecken. Der Fahrer kann dann seinen Helm 9 entweder entlang der inneren Seite oder der äußeren Seite des Windschutzes 2 am Schieber 5 anhängen.

Das im Wesentlichen stabförmige Profil 5 des Helmträgers 4 ist vorzugsweise aus einem biegbarem Material, wie zum Beispiel PVC gebildet, damit es einfach in der Lasche 6 oder durch den Schlitz eingeschoben werden kann und biegbar ist unter dem Gewicht des Helmes 9.

Das Material, aus welchem der Helmträger 4 gebildet ist, ist vorzugsweise mit Verstärkungsfasern versehen, um es zu verstärken.

In einer weiteren vorteilhaften Ausführungsform der Erfindung ist an dem stabförmigen Profil 5 bzw. dem Schieber ein Halter 7 für eine Brille 8 angebracht oder das stabförmige Profil 5 bzw. der Schieber 5 als Halter 7 für eine Brille 8 ausgebildet. Der Halter 7 ist vorzugsweise durch einen Haken gebildet, der am unteren Ende des Profils 5 vorgesehen ist.

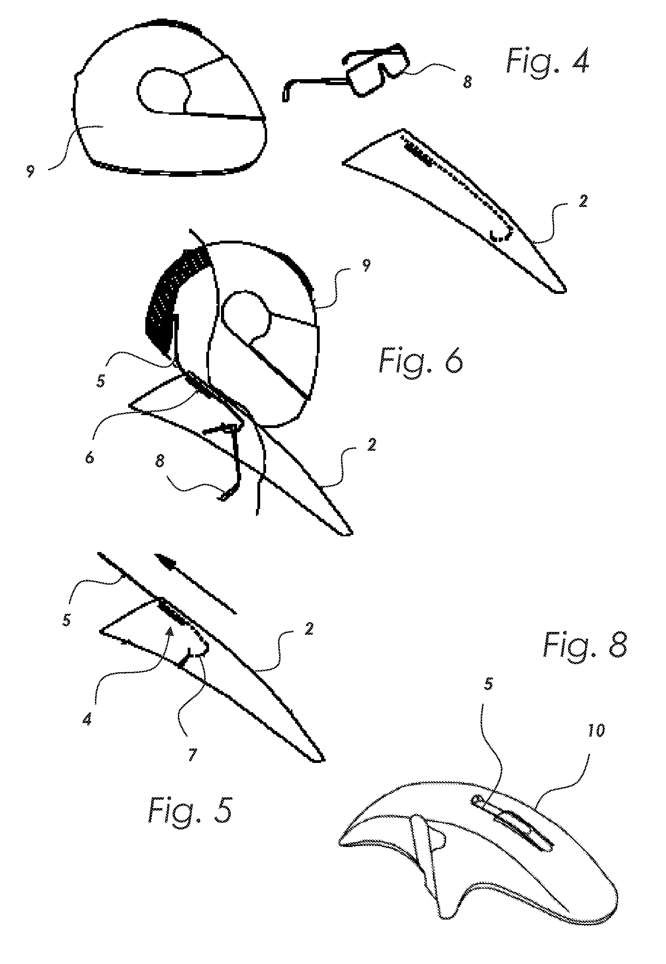

Wenn der Fahrer sein Fahrzeug geparkt hat und seinen Helm 9 abgezogen hat, wird er den Schieber 5 hochziehen (Fig.5), um seinen Helm 9 daran zu hängen. Hierzu wird der Helm 9 über den Schieber 5 gestülpt und nach unten gezogen, so dass der Schieber 5 im Inneren des Helmes 9 eintreten kann, speziell in dem Teil des Helmes 9, in dem normalerweise der Kopf des Fahrers beim Fahren seinen Platz findet. Dadurch, dass der Schieber 5 vorteilhaft aus einem biegbaren Material hergestellt ist, wird er sich unter dem Gewicht des Helmes 9 biegen, so dass der Helm 9 auf der Oberfläche des Windschutzes 2 ruhen kann. Für den Fall, dass der Fahrer eine Brille trägt, kann er diese Brille 8 am Halter 7 abhängen. Wenn der Fahrer seine Fahrt fortführen will, setzt er den Helm 9 und Brille 8 wieder auf und schiebt den Schieber 5 wieder zurück in seine Ausgangsposition nach unten, damit er hinter dem Windschutz 2 verborgen ist.

Vorzugsweise sind der Helmträger 4 und der Helm 9 mittels eines verschließbaren Schlosses verbunden, um den Helm 9 mit dem Windschutz 2 zu verriegeln. Zum Beispiel könnte dieses Schloss im Polster am hinteren Teil des Helmes 9 eingebaut sein. Der Helm 9 hätte dann eine Eintrittsöffnung im Polster, in welcher der Schieber 5 hineinführen könnte. Das Schloss ist vorzugsweise ein elektrisches Schloss, das durch einen Transponder bedient wird. Das Schloss enthält einen Stift, welcher in eine weitere Öffnung 11 des Schiebers 5 einklickt, wenn der Helm 9 am Schieber 5 hängt. Diese Öffnung kann auch zum Herausschieben des Helmträgers 4 aus der Lasche 6 genutzt werden.

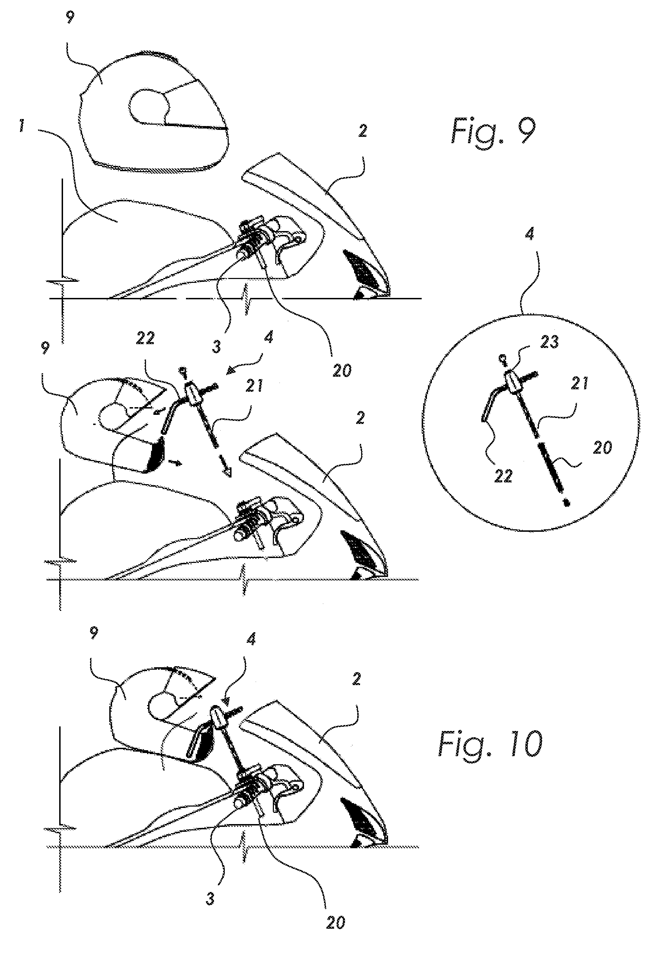

Üblicherweise ist die Lenksäule 20 durch ein Rohr gebildet, auf welchem der Lenker montiert ist. In einer weiteren in den Fig. 8 und 9 abgebildeten, alternativen Ausführungsform ist daher das im Wesentlichen stabförmige Profil 21 vorzugsweise als eine in die Lenksäule 20 des Fahrzeuges 1 verschieblich angeordneten Stange 21 ausgebildet.

Auf der Stange 21 ist weiterhin vorzugsweise ein Haken 22 angebracht, wie in Fig.10 dargestellt. Der Haken 22 ist vorzugsweise nach unten gebogen, Richtung Benzintank, um eine Behinderung während des Fahrens zu vermeiden.

Vorzugsweise ist ein Schloss 23 an der oberen Seite der Stange vorgesehen, um das Ein- und Ausschieben der Stange 21 in das Rohr zu verhindern, insbesondere wenn der Helm 9 am Helmträger 4 befestigt ist.

Um den Helm 9 am Helmträger 4 zu befestigen, wird der Fahrer die im Rohr eingeschobene Stange 21 ausschieben, so dass der Haken 22 nach oben geschoben wird. Der Haken 22 wird dann in den Helm 9 eingreifen. Nachher wird die Stange 21 wieder nach unten geschoben, bis der Helm 9 zwischen Haken 22 und Tankhülle eingeklemmt ist. Durch Benutzung des Schlosses 23 ist es möglich, den Helm 9 in dieser Position zu verriegeln.

Der erfindungsgemäße Helmträger beschränkt sich in seiner Ausführung nicht auf die vorstehend angegebenen bevorzugten Ausführungsformen. Vielmehr sind eine Vielzahl von Ausgestaltungsvariotionen denkbar, welche von der dargestellten Lösung auch bei grundsätzlich anders gearteter Ausführung Gebrauch machen.

### Liste der Bezugsziffern

- 1: Fahrzeug / Motorrad
- 2: Windschutz
- 3: Lenker
- 4: Helmträger
- 5: Schieber / stabförmiges Profil
- 6: Lasche
- 7: Halter
- 8: Brille
- 9: Helm
- 11: Öffnung des Schiebers
- 20: Lenksäule
- 21: Stange / stabförmiges Profil 21
- 22: Haken
- 23: Schloss

## Patentansprüche

1. Helmträger (4) für offene Fahrzeuge (1), die einer Helmpflicht unterliegen, insbesondere ein Motorrad, ein Quad oder dergleichen, wobei der Helmträger (4) ein im Wesentlichen stabförmiges Profil (5;21) umfasst und so ausgebildet und an dem Fahrzeug angeordnet ist, dass er im Inneren des Helmes eingreift,
dadurch gekenntzeichnet, dass
das im Wesentlichen stabförmige Profil (5; 21) des Helmträgers (4) derart ausgebildet und an/in einem Karosserieteil (2; 20) des Fahrzeuges (1) angeordnet ist, dass das stabförmige Profil (5; 21) an/in dem Karosserieteil (2; 20) verschieblich ist.

2. Helmträger (4) nach Anspruch 1,
**dadurch gekennzeichnet, dass**
das im Wesentlichen stabförmige Profil (5) als ein an dem Windschutz (2) des Fahrzeuges (1) verschieblicher Schieber (5) ausgebildet ist, der sich im ausgezogenen Zustand über den Rand des Windschutzes (2) erstreckt und im eingezogenen Zustand hinter bzw. unter dem Windschutz (2) versteckt.

3. Helmträger (4) nach Anspruch 2,
**dadurch gekennzeichnet, dass**
der Schieber (5) in einer Lasche (6) gehalten ist, welche an den Windschutz (2) angeklebt, angenietet, angeschraubt oder auf sonstige Weise dem Fachmann geläufige Weise irreversibel oder reversibel angebracht ist.

4. Helmträger (4) nach Anspruch 3,
**dadurch gekennzeichnet, dass**
die Lasche (6) mit einer Basisplatte ausgestattet ist, welche eine größere Kontaktfläche bietet als die Kontaktfläche der Lasche (6) selbst.

5. Helmträger (4) nach Anspruch 2,
**dadurch gekennzeichnet, dass**
der Schieber (5) derart an dem Windschutz (2) angeordnet ist, dass er durch einen Schlitz, angeordnet in dem Windschutz (2), hindurch schiebbar ist.

6. Helmträger (4) nach einem der vorangegangenen Ansprüche 2 bis 5,
**dadurch gekennzeichnet, dass**
das im Wesentlichen stabförmige Profil (5) des Helmträgers (4) aus einem biegbarem Material gebildet ist.

7. Helmträger (4) nach einem der vorangegangenen Ansprüche 2 bis 6,
**dadurch gekennzeichnet, dass**
an dem stabförmigen Profil (5) ein Halter (7) für eine Brille (8) angebracht oder das stabförmige Profil (5) als Halter (7) für eine Brille (8) ausgebildet ist, wobei der Halter (7) vorzugsweise durch einen Haken gebildet ist, der am unteren Ende des Profils (5) vorgesehen ist.

8. Helmträger (4) nach Anspruch 1,
**dadurch gekennzeichnet, dass**
das im Wesentlichen stabförmige Profil (21) als eine in die Lenksäule (20) des Fahrzeuges (1) verschieblich angeordneten Stange (21) ausgebildet.

9. Helmträger (4) nach Anspruch 8,
**dadurch gekennzeichnet, dass**
auf der Stange (21) ein Haken (22) angebracht ist, der vorzugsweise nach unten Richtung Benzintank gebogen ist, um eine Behinderung während des Fahrens zu vermeiden.

10. Helmträger (4) nach Anspruch 1,
**dadurch gekennzeichnet, dass**
das im Wesentlichen stabförmige Profil (5) als ein an einem Schutzblech (10) des Fahrzeuges (1) verschieblicher Schieber (5) ausgebildet ist.

11. Helmträger (4) nach einem der vorangegangenen Ansprüche,
**dadurch gekennzeichnet, dass**
der Helmträger (4) und der Helm (9) mittels eines verschließbaren Schlosses verbunden sind, um den Helm (9) mit dem Windschutz (2) zu verriegeln, wobei das Schloss vorzugsweise ein elektrisches Schloss ist, das durch einen Transponder bedient wird.

12. Helmträger (4) nach den Ansprüche 9 und 11,
**dadurch gekennzeichnet, dass**
ein Schloss (23) an der oberen Seite der Stange (21) vorgesehen ist, um das Ein- und Ausschieben der Stange (21) in das Rohr zu verhindern, insbesondere wenn der Helm (9) am Helmträger (4) befestigt ist.

13. Helmträger (4) nach einem der vorangegangenen Ansprüche,
**dadurch gekennzeichnet, dass**
das Material, aus welchem der Helmträger (4) gebildet ist, mit Verstärkungsfasern versehen ist, um es zu verstärken.

14. Fahrzeug mit einem Helmträger (4) nach einem der vorangegangenen Ansprüche,
